(19) Europäisches Patentamt
European Patent Office
Office européen des brevets

(11) EP 2 027 004 B1

(12) FASCICULE DE BREVET EUROPEEN

(45) Date de publication et mention
de la délivrance du brevet:
**21.05.2014 Bulletin 2014/21**

(21) Numéro de dépôt: **07766107.2**

(22) Date de dépôt: **29.05.2007**

(51) Int Cl.:
***B62D 1/00*** *(2006.01)*   ***B62D 7/15*** *(2006.01)*

(86) Numéro de dépôt international:
**PCT/FR2007/051339**

(87) Numéro de publication internationale:
**WO 2007/141439 (13.12.2007 Gazette 2007/50)**

(54) **PROCEDE ET SYSTEME DE COMMANDE DE ROUE DIRECTRICE DE VEHICULE**

VERFAHREN UND STEUERSYSTEM FÜR EIN FAHRZEUGLENKRAD

PROCESS AND CONTROL SYSTEM FOR VEHICLE STEERING WHEEL

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **09.06.2006 FR 0605120**

(43) Date de publication de la demande:
**25.02.2009 Bulletin 2009/09**

(73) Titulaire: **Renault s.a.s.
92100 Boulogne Billancourt (FR)**

(72) Inventeurs:
• **LORIMIER, Lionel**
  **F-78180 Montigny-le-bretonneux (FR)**
• **POTHIN, Richard**
  **F-78760 Jouars-pontchartrain (FR)**

(56) Documents cités:
**EP-A- 1 595 768    EP-A1- 0 663 333
WO-A-02/074638    DE-A1- 19 547 176**

**EP 2 027 004 B1**

**Description**

La présente invention relève du domaine des systèmes de commande de roues directrices de véhicules terrestres, en particulier de véhicules automobiles à roues.

Le document FR-2 864 001 concerne la commande du braquage de roues arrière directrices avec élaboration d'une consigne de braquage de roues arrière en fonction de l'angle de braquage de roues avant, d'une consigne antérieure de braquage de roues arrière et de données de déplacement, telles que la vitesse du véhicule, la vitesse de lacet, la dérive au centre de gravité et l'angle de volant. Un observateur d'état permet d'estimer les informations qui ne sont pas mesurées et de les fournir à un module de calcul de la commande transitoire en aval duquel est monté un module de calcul de la commande statique. La commande statique et la commande transitoire sont ensuite soustraites pour déterminer la commande de braquage.

Le document EP 1 285 833 décrit un système de freinage et de braquage de véhicule comprenant un modèle de référence et une commande au moyen d'un correcteur à inversion de modèle. Cette technique génère des correcteurs d'ordre élevé.

Les variations en temps réel des paramètres du modèle et du correcteur ne sont pas prises en compte. Les correcteurs d'ordre élevé sont peu compatibles avec la prise en compte de variations de coefficients.

Le document US 2005/0043874 concerne un système de commande de braquage de véhicule comprenant un modèle de référence calculant des états désirés du véhicule, et une commande à réaction positive pour calculer une première valeur de commande destinée à un actionneur. Le modèle de référence comprend un modèle d'ordre quatre à deux zéros et quatre pôles pour représenter en plus de la dynamique latérale de base, l'influence du ballant latéral sur les roues avant et arrière. Le correcteur obtenu présente ainsi un ordre plus élevé que dans le brevet EP 1 285 833.

Il est également connu, en accord avec les préambules respectifs des revendications 1 et 8, par le document EP 0 663 333 un dispositif de contrôle des angles de braquage des roues avant et des roues arrière d'un véhicule automobile, comprenant un détecteur de vitesse de lacet recueillant les valeurs de vitesses de lacet détectées, et calculant une vitesse de lacet « idéale » sur route plane et sans vent, à partir de paramètres comme la vitesse de véhicule, l'angle de volant, l'angle des roues sélectionnées par le conducteur, le coefficient de friction de la route, pour en déduire un écart de vitesse de lacet permettant de recalculer une vitesse de lacet de consigne, à partir de laquelle une consigne d'angle de braquage optimisée est générée. Ce document ne prend toutefois pas en compte le temps de réaction de l'actionneur de commande de braquage des roues.

L'invention a pour but de conférer au véhicule le comportement le plus stable possible, quels que soient la sollicitation du conducteur et l'état de la chaussée, en particulier en cas d'évitement d'obstacle simple ou double tout en conférant au conducteur une sensation de sécurité et un confort et un plaisir de conduite.

L'invention a également pour but de réduire les risques de perte de contrôle de véhicule, qui peuvent être dus à une réponse du véhicule inadaptée car trop vive, pas assez amortie ou encore peu prévisible.

Le procédé de commande de roues directrices pour véhicule à au moins trois roues, comprend la détermination de la loi de réponse, statique et/ou dynamique, en lacet du véhicule, ladite loi intégrant des variations temporelles des paramètres du modèle et de coefficients de correction associés, et la correction à avance de phase pour tenir compte du retard d'au moins un actionneur pour générer une consigne d'angle de braquage de roues.

On obtient ainsi une commande plus fine du braquage des roues directrices. La commande peut s'appliquer aux roues avant et/ou aux roues arrière. La correction à avance de phase permet de réduire l'effet de la constante de temps de l'actionneur de braquage des roues.

La détermination peut comprendre le typage de la loi de réponse, en d'autres termes le fait de calculer une loi de réponse et de là faire appliquer en donnant un caractère plus ou moins direct et plus ou moins vif à la réponse du véhicule.

Dans un mode de réalisation, la détermination de la loi de la réponse en lacet du véhicule met en oeuvre un modèle interne de référence à paramètres variables.

Dans un mode de réalisation, la loi de la réponse en lacet du véhicule intègre des variations temporelles des paramètres du modèle et des coefficients de correction associés en fonction de la vitesse du véhicule et d'au moins une condition de déplacement. La loi de la réponse en lacet peut prendre en compte, dans un autre mode, des informations d'adhérence, des reports de charges...

Dans un mode de réalisation, le correcteur est paramétré en fonction d'informations du véhicule. Les informations peuvent comprendre la vitesse du véhicule, l'angle du volant de direction et l'accélération latérale.

Dans un mode de réalisation, on règle de façon indépendante la loi de réponse statique et la loi de réponse dynamique.

Dans un mode de réalisation, la détermination d'au moins un correcteur est effectuée de façon analytique. On bénéficie ainsi, en utilisant la solution basée sur un modèle interne, d'une correction nettement plus simple que dans le cas de l'inversion de modèle.

Le système de commande de braquage de roues directrices pour véhicule à au moins trois roues comprend un moyen pour déterminer la loi de réponse, statique et/ou dynamique, en lacet du véhicule, ladite loi intégrant des variations temporelles des paramètres du véhicule et de coefficients de correction associés, et un moyen pour déterminer au moins un correcteur à avance de phase pour tenir compte du retard d'au moins un actionneur. Le correcteur à avance de phase est configuré pour générer une consigne d'angle de braquage de roues. Ceci permet de compenser l'influence de la dynamique de l'actionneur sur la réalisation effective de la consigne dite « idéale » de la loi de commande avec actionneur parfait. Le système peut être configuré pour la commande de braquage de roues directrices avant ou arrière.

Dans un mode de réalisation, le système comprend un module de calcul de coefficients variables, un correcteur de parties dynamique à coefficients variables recevant une sortie du module de calcul des coefficients variables, un correcteur de parties statique, un module de synthèse recevant les sorties des correcteurs, et un modèle de véhicule à paramètres variables recevant une sortie du module de synthèse, le correcteur à avance de phase recevant une sortie du module de synthèse.

Dans un mode de réalisation, le correcteur de parties dynamique est relié à la sortie du modèle du véhicule. On parle alors de correcteur de type boucle ouverte.

Dans un mode de réalisation, le modèle de véhicule comprend une entrée d'angle de braquage des roues avant.

Dans un mode de réalisation, le système comprend en outre un correcteur de type boucle fermée recevant la sortie du module de calcul des coefficients variables et du modèle de véhicule pour générer un signal de dynamique de l'écart entre la vitesse de lacet du modèle et la vitesse de lacet du véhicule, et un additionneur pour additionner les signaux de sortie du correcteur de boucle fermée et du module de synthèse et fournir la somme au correcteur d'avance de phase.

Dans un mode de réalisation, le système comprend un module de calcul des coefficients variables, un correcteur de partie dynamique à coefficients variables recevant une sortie du module de calcul des coefficients variables, un correcteur de partie statique, et un module de synthèse recevant les sorties des correcteurs, le correcteur à avance de phase recevant une sortie du module de synthèse. La partie dynamique comprend la partie statique.

Grâce à l'invention, la loi de la réponse en lacet utilise une approche analytique qui diminue l'ordre du correcteur à implémenter en adoptant une stratégie utilisant un modèle interne de référence pour la synthèse de la commande en boucle ouverte plutôt qu'une synthèse par inversion de modèle qui s'avère plus lourde. La loi de réponse en lacet intègre des variations temporelles des paramètres du modèle ainsi que des variations temporelles des coefficients de correction. Ces variations peuvent être fonction de la vitesse du véhicule, de données relatives à la situation du véhicule et d'autres systèmes actifs influençant la dynamique latérale. La correction peut être implémentée sur un calculateur de manière analytique avec une expression mathématique fonction des paramètres variant dans le temps au lieu d'une cartographie des coefficients requérant une mémoire de grande taille. L'influence de la présence d'un actionneur est compensée par l'introduction du correcteur à avance de phase. La mise au point du système peut être rapide et intuitive, car les paramètres de réglage peuvent être liés aux performances nominales du véhicule, c'est-à-dire dans un état non équipé de systèmes actifs.

Les paramètres de réglage lorsqu'ils sont égaux à un ne modifient pas le comportement du véhicule, alors que les paramètres de réglage supérieurs à un rendent le comportement plus vif et plus direct. Des paramètres de réglage inférieurs à un rendent le comportement moins vif et moins direct. La correction permet de régler de manière indépendante le typage statique et le typage dynamique de façon analytique. La loi dynamique peut être activée au-delà d'un certain seuil paramétré selon diverses informations, dont la vitesse du véhicule. Le module de synthèse permet alors de faire une transition douce entre les lois.

La commande peut être de type boucle ouverte uniquement, de type boucle fermée uniquement, combiner une partie de type boucle ouverte et une autre de type boucle fermée. Dans ce dernier cas, la boucle fermée permet de régler, de manière indépendante, la dynamique de l'erreur entre la vitesse de lacet du modèle de référence et la vitesse de lacet réelle du véhicule pour notamment maximiser la robustesse de la correction en optimisant les marges de stabilité.

Les véhicules automobiles sont pourvus d'un châssis, d'un habitacle, de roues reliées au châssis par un mécanisme de suspension avec des roues avant directrices commandées par un volant à la disposition du conducteur dans l'habitacle du véhicule et des roues arrière directrices ou non.

L'invention s'applique également à des véhicules à trois roues dont une directrice, à six, huit ou dix roues dont deux, quatre ou six directrices.

La présente invention sera mieux comprise à l'étude de la description détaillée de quelques modes de réalisation pris à titre d'exemples nullement limitatifs et illustrés par les dessins annexés, sur lesquels :

- la figure 1 est une vue schématique d'un véhicule équipé d'un système de commande selon un aspect de l'invention et
- les figures 2 à 7 sont des schémas logiques de différents modes de réalisation du système.

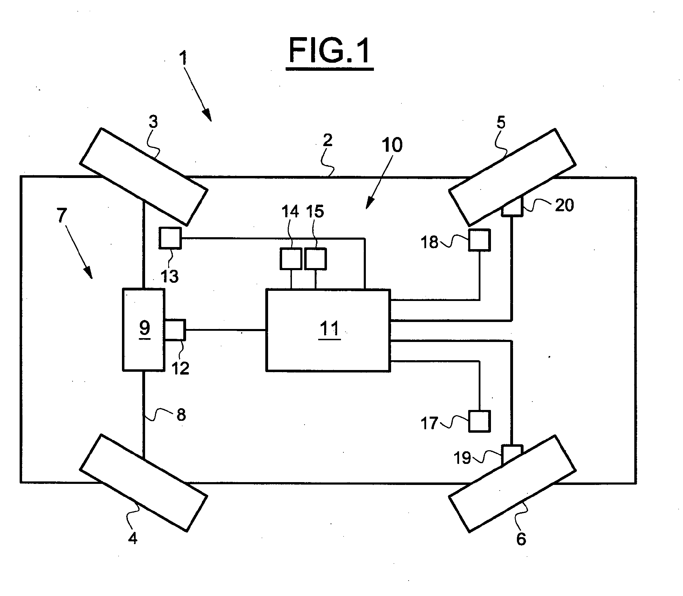

Comme on peut le voir sur la figure 1, le véhicule 1 comprend un châssis 2, deux roues avant directrices 3 et 4 et deux roues arrière directrices 5 et 6, les roues étant reliées au châssis 2 par un mécanisme de suspension, non représenté.

Le véhicule 1 se complète par un système de direction 7 comprenant une crémaillère 8 disposée entre les roues avant 3 et 4, un actionneur de crémaillère 9 apte à orienter les roues avant 3 et 4 par l'intermédiaire de la crémaillère 8 en fonction d'ordres reçus, de façon mécanique ou électrique, en provenance d'un volant de direction ou tout autre organe permettant d'exprimer un ordre de direction non représenté, à disposition d'un conducteur du véhicule.

Le système de commande d'aide au braquage 10 comprend une unité de commande 11, par exemple un calculateur, un capteur 12 de l'angle du volant de direction, un capteur 13 de la vitesse de rotation des roues avant permettant de déterminer la vitesse V du véhicule. Il est également possible de prévoir un capteur 14 de la vitesse de lacet du véhicule, c'est-à-dire de la vitesse de rotation du véhicule autour de son centre de gravité suivant un axe vertical, et un capteur 15 de l'accélération latérale au centre de gravité du véhicule.

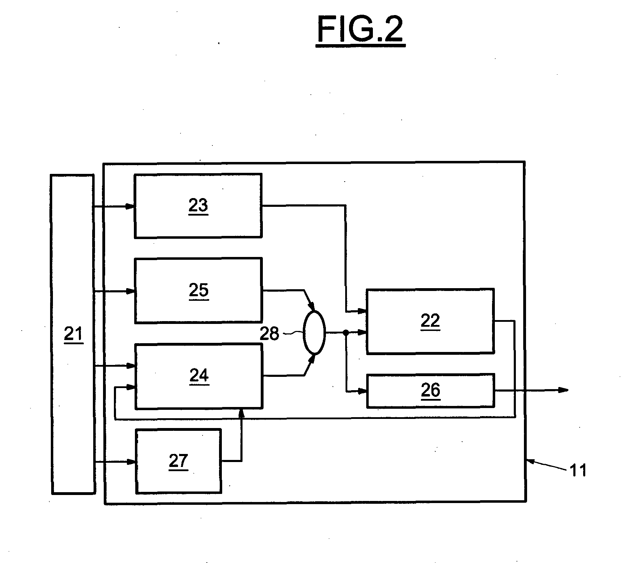

En outre, le système comprend des capteurs 17 et 18 de l'angle de braquage des roues arrière 5 et 6, et des actionneurs 19 et 20 permettant d'orienter lesdites roues arrière 5 et 6, de façon facultative, sauf pour les modes de réalisation des figures 2 à 4. Toutefois, un seul capteur 17 et un seul actionneur 19 peuvent suffire à la détection de l'angle de braquage et à l'orientation des roues arrière 5 et 6. Les capteurs de position et de vitesse peuvent être de type optique ou encore magnétique, par exemple à effet Hall, coopérant avec un codeur solidaire d'une partie mobile, tandis que le capteur est non tournant.

L'unité de commande 11 peut être réalisée sous la forme d'un microprocesseur équipé d'une mémoire vive, d'une mémoire morte, d'une unité centrale et d'interfaces d'entrée-sortie permettant de recevoir les informations des capteurs et d'envoyer des instructions, notamment aux actionneurs 19 et 20.

Les modes de réalisation des figures 2 à 4 concernent un véhicule à quatre roues directrices, le système de commande générant la consigne de braquage des roues arrière.

Plus précisément, l'unité de commande 11 recevant les sorties des capteurs référencés 21 dans leur ensemble, comprend un modèle de véhicule 22, voir figure 2. Le modèle de véhicule 22 a pour but de prédire le comportement du véhicule en vitesse de lacet et en dérive en fonction des angles qui sont appliqués aux roues avant et aux roues arrière, en réponse notamment à des sollicitations du conducteur, et ce quel que soit le sol sur lequel le véhicule évolue. Le modèle de véhicule 22 est configuré pour générer un état de référence pour un module dynamique. Un exemple de modèle est de se baser sur l'équation simplifiée exprimant le transfert entre les angles de braquage des roues avant et/ou arrière et la vitesse de lacet, d'une part, et l'angle de dérive du véhicule, d'autre part.

Dans ce qui suit, les notations suivantes seront utilisées :

| | |
|---|---|
| $M$ | Masse totale du véhicule |
| $I_{zz}$ | Inertie de la caisse du véhicule autour de son axe de lacet |
| $L$ | Empattement du véhicule |
| $I_1$ | Distance du centre de gravité à l'essieu avant |
| $I_2$ | Distance du centre de gravité à l'essieu arrière |
| $D_1$ | Rigidité de dérive du train avant |
| $D_2$ | Rigidité de dérive du train arrière |
| $\alpha_{av}$ | Angle de braquage des roues avant, c'est-à-dire angle que font les roues avant avec l'axe longitudinal du véhicule |
| $\alpha_{ar}$ | Angle de braquage des roues arrière, c'est-à-dire angle que font les roues avant avec l'axe longitudinal du véhicule |
| $\alpha_v$ | Angle de braquage du volant du conducteur |
| $n$ | Démultiplication entre le volant et les roues |
| $V$ | Vitesse longitudinale du véhicule au centre de gravité |
| $\delta$ | Angle de dérive du véhicule au centre de gravité |
| $\delta_1$ | Angle de dérive du train avant du véhicule |
| $\delta_2$ | Angle de dérive du train arrière du véhicule |
| $\dot{\delta}$ | Vitesse de dérive du véhicule au centre de gravité |
| $\psi_{\text{véhicule}}$ | Angle de lacet du véhicule |
| $\dot{\psi}_{\text{véhicule}}$ | Vitesse de lacet du véhicule |
| $\ddot{\psi}_{\text{véhicule}}$ | Accélération de lacet du véhicule |
| $\gamma_t$ | Accélération transversale du véhicule |
| $F_{y_{av}}$ | Total des forces latérales s'appliquant sur les pneus du train avant |
| $F_{y_{ar}}$ | Total des forces latérales s'appliquant sur les pneus du train arrière |
| $s$ | Opérateur de Laplace |

Les équations de la dynamique du modèle 2 roues sans ballant (c'est-à-dire en considérant un modèle linéaire statique de pneu) sont les suivantes :

$$\gamma_t = \frac{1}{M}(F_{y_{av}} + F_{y_{arr}})$$

$$\ddot{\psi} = \frac{1}{I_{zz}}(l_1.F_{y_{av}} - l_2.F_{y_{arr}})$$

$$\dot{\delta} = -\dot{\psi} + \frac{\gamma_t}{V} \qquad\qquad (1)$$

$$\delta_1 = -\alpha_{av} + \delta + l_1.\frac{\dot{\psi}}{V}$$

$$\delta_2 = -\alpha_{ar} + \delta - l_2.\frac{\dot{\psi}}{V}$$

$$F_{y_{av}} = -D_1.\delta_1 \qquad\qquad F_{y_{ar}} = -D_2.\delta_2$$

Sous l'hypothèse que les termes qui apparaissent lors de l'élimination de la variable de dérive dans les équations (1) dus aux variations des paramètres $D_1$, $D_2$ et V sont négligeables par rapport aux termes principaux, on obtient ainsi l'équation différentielle (2) entre la vitesse de lacet et l'angle aux roues avant et arrière :

$$\dddot{\psi} + 2.\xi_n.\omega_n.\ddot{\psi} + \omega_n^2.\dot{\psi} = \tau.\dot{\alpha}_{av} + \gamma.\alpha_{av} + \eta.\dot{\alpha}_{ar} + \rho.\alpha_{ar} \qquad (2)$$

L'ensemble des coefficients de cette équation différentielle dépend de la vitesse ainsi que des rigidités de dérive qui peuvent évoluer dans le temps (actions de freinage, d'accélération, environnement du véhicule, autres systèmes actifs installés sur le véhicule) :

$$\xi_n = \frac{1}{2.\omega_n}\left(\frac{D_1.l_1^2 + D_2.l_2^2}{I_{zz}} + \frac{D_1 + D_2}{M}\right)$$

$$\omega_n = \left(\frac{-D_1.l_1 + D_2.l_2}{I_{zz}} + \frac{D_1.D_2.(l_1 + l_2)^2}{M.I_{zz}.V^2}\right)^{\frac{1}{2}} \qquad (3)$$

$$\tau = \frac{D_1.l_1}{I_{zz}}, \gamma = \frac{D_1.D_2.(l_1 + l_2)}{M.I_{zz}.V}$$

$$\eta = -\frac{D_2.l_2}{I_{zz}}, \rho = -\gamma = -\frac{D_1.D_2.(l_1 + l_2)}{M.I_{zz}.V}$$

Dans le cas où les variations des paramètres $D_1$, $D_2$ et V ne sont pas négligeables, il est possible de se ramener à une équation similaire à l'équation (2). La différence réside dans l'expression des coefficients $\xi_n$, $\omega_n$, $\tau$ et $\eta$ dans lesquels apparaissent des termes liés à ces variations de paramètres ($\dot{D}_1$, $\dot{D}_2$ et $\dot{V}$), aux paramètres $D_1$, $D_2$, V et aux caractéristiques du véhicule.

L'équation (2) s'apparente à la fonction de transfert (4) obtenue lorsque les paramètres sont supposés constants :

$$\dot{\psi} = \frac{\tau.s + \gamma}{s^2 + 2.\xi_n.\omega_n.s + \omega_n^2}\alpha_{av} + \frac{\eta.s + \rho}{s^2 + 2.\xi_n.\omega_n.s + \omega_n^2}\alpha_{ar} \qquad (4)$$

Le système comporte également un module de démultiplication fixe 23 qui permet de tenir compte de la démultiplication qui existe entre l'angle appliqué au volant par le conducteur $\alpha_v$ et l'angle moyen résultant au niveau des roues avant du véhicule. On a :

$$\alpha_{av} = \frac{\alpha_v}{n} \tag{5}$$

avec n une constante.

Le système comprend un module statique 25 pour calculer la commande $\alpha_{ar}|_{statique}$ qui permet d'agir sur la réponse statique en lacet du véhicule. La commande permet de modifier la valeur stabilisée de la vitesse de lacet de la caisse du véhicule atteinte suite à un coup de volant d'amplitude donnée. Le résultat est exprimé par comparaison avec le gain statique qu'on obtiendrait sur le même véhicule sans dispositif de direction active :

$$\left[\frac{\dot{\psi}_{stabilisé}}{\alpha_v}\right]_{avec\_direction\_active} = TGS.\left[\frac{\dot{\psi}_{stabilisé}}{\alpha_v}\right]_{sans\_direction\_active} \tag{6}$$

TGS est le paramètre de réglage qui peut s'exprimer en fonction d'informations sur le véhicule telle que sa vitesse V.

On obtient ainsi la commande suivante par rapport au modèle retenu dans le module 22 sur cet exemple de réalisation :

$$\alpha_{ar}|_{statique} = \frac{-1}{n}(TGS-1).\alpha_v \tag{7}$$

Le système comprend un module dynamique 24 qui permet de typer la dynamique de lacet, c'est-à-dire de modifier les coefficients $\xi_n$ et $\omega_n$ et de compenser, par analogie avec la fonction de transfert obtenue lorsque les coefficients sont constants, la présence du zéro entre la prise de lacet et l'application d'un angle aux roues. Le module dynamique 24 reçoit la sortie du module 22.

La commande peut être effectuée avec compensation de zéro.

On cherche à avoir un comportement équivalent décrit par l'équation différentielle (8) $K_\xi(V)$ et $K_\omega(V)$ sont les deux paramètres de réglages introduits pour typer la dynamique de réponse. Ils sont par exemple fonction de la vitesse véhicule afin par exemple d'améliorer la stabilité à haute vitesse et de privilégier la rapidité de réponse à basse vitesse :

$$\dddot{\psi}(t) + 2.\xi_d(t).\omega_d(t).\ddot{\psi}(t) + \omega_d^2(t).\dot{\psi}(t) = TGS.\frac{\gamma(t)}{n}.K_\omega^2(V).\alpha_v(t) \tag{8}$$

$$\xi_d(t) = K_\xi(V). \xi_n(t) \quad et \quad \omega_d(t) = K_\omega(V). \omega_n(t)$$

La commande est ainsi donnée par l'équation différentielle (9) composée d'un bouclage sur $\dot{\psi}$ et $\ddot{\psi}$ donnés par le modèle et d'une réaction positive sur $\alpha_v$ et sa dérivée afin de compenser le zéro de la fonction de transfert :

$$\eta.\dot{\alpha}_{ar} + \rho.\alpha_{ar} = K_1.\dot{\psi} + K_2.\ddot{\psi} + K_3.\alpha_v + K_4.\dot{\alpha}_v \tag{9}$$

Dans ce mode de réalisation, les coefficients $(K_i(t))_{i=1..4}$ sont donnés par l'équation (10) :

$$\tilde{K}_1 = \omega_n^2 - \hat{\omega}_d^2$$

$$K_2 = 2.\xi_n.\omega_n - 2.\xi_d.\omega_d$$

$$K_3 = -\frac{\gamma}{n} + K_\omega^2.TGS.\frac{\gamma}{n} \qquad (10)$$

$$K_4 = -\frac{\tau}{n}$$

Ces coefficients dépendent des paramètres variants et sont donc des coefficients variants dans le temps.

Comme on le voit dans l'équation exprimant le coefficient $K_3$, le typage dynamique influence le typage statique qui doit donc être corrigé en intégrant le rapport élevé au carré des pulsations désirées et naturelles afin de maintenir le gain statique réglé grâce au paramètre TGS dans le module 25. Le module 25 reçoit la sortie du module 24. Les sorties des modules 24 et 25 sont envoyées à un module de fonction 28 pour les combiner. La sortie du module de fonction 28 est envoyée aux modules 22 et 26. A titre d'exemple, le module de fonction 28 peut être un interrupteur assurant l'application de l'une ou l'autre stratégie et la transition entre elles.

Une stratégie pour l'implantation numérique de la loi de commande selon l'équation (9) sur calculateur est d'utiliser une approximation de la dérivée par l'équation (11). Ceci conduit à l'expression de la commande échantillonnée (12) appliquée sur l'actionneur de la direction active à l'arrière.

Soit k, le $k^{iéme}$ instant d'échantillonnage et $T_e$ la période d'échantillonnage, on a :

$$\dot{y}(k) = \frac{y(k) - y(k-1)}{T_e} \qquad (11)$$

La commande appliquée à l'instant k est :

$$\alpha_{ar}(k) = \frac{1}{\frac{\eta(k)}{T_e} + \rho(k)} \left[ \begin{array}{l} K_1(k).\dot{\psi}(k) + K_2(k).\ddot{\psi}(k) + \\ \left(K_3(k) + \frac{K_4(k)}{T_e}\right).\alpha_v(k) - \frac{K_4(k)}{T_e}.\alpha_v(k-1) + \frac{\eta(k)}{T_e}.\alpha_{ar}(k-1) \end{array} \right]$$

$$(12)$$

Afin d'assurer la cohérence de l'application des lois de commande de boucle ouverte sur le véhicule, il faut que le modèle utilisé pour la synthèse de la commande représente de manière fiable le véhicule.

La stratégie adoptée est par exemple de considérer qu'en dessous d'un certain seuil de vitesse $V_0$, seule la commande permettant le typage statique est appliquée tandis qu'au-dessus de ce seuil, le typage dynamique est appliqué, ce dernier incluant la notion de typage statique dans le gain $K_3$.

Le module de synthèse permet d'appliquer une fonction faisant la jonction des signaux entre les valeurs de vitesse inférieures au seuil $V_0$ et celles supérieures au seuil $V_0$.

Une valeur supérieure à « 1 » du paramètre $K_\omega(V)$ signifie qu'on cherche à augmenter la vivacité de la réponse du véhicule en lacet.

Une valeur inférieure à « 1 » de $K_\omega(V)$ signifie qu'on cherche à diminuer la vivacité de la réponse du véhicule en lacet.

Une valeur inférieure à « 1 » de $K_\xi(V)$ signifie qu'on cherche à augmenter l'amortissement de la réponse du véhicule en lacet.

Une valeur inférieure à « 1 » de $K_\xi(V)$ signifie qu'on cherche à diminuer l'amortissement de la réponse du véhicule en lacet.

Pour une commande sans compensation de zéro, on cherche à avoir un comportement équivalent à celui décrit par l'équation différentielle (13). $K_\xi(t)$ et $K_\omega(t)$ sont les deux paramètres de réglages introduits pour typer la dynamique de réponse :

$$\ddot{\psi}(t) + 2.\xi_d(t).\omega_d(t).\ddot{\psi}(t) + \omega_d^2(t).\dot{\psi}(t) = \frac{\tau(t)}{n}.\dot{\alpha}_v(t) + TGS.\frac{\gamma(t)}{n}.K_\omega^{\,2}(t).\alpha_v(t) \quad (13)$$

$$\xi_d(t) = K_\xi(V).\xi_n(t) \quad \text{et} \quad \omega_d(t) = K_\omega(V).\omega_n(t)$$

Dans ce cas, la commande sans compensation de zéro consiste à mettre à 0 le coefficient $K_4$ de la commande avec compensation de zéro.

Le coefficient $K_4$ permet de régler le zéro de la fonction de transfert entre l'angle volant et la vitesse de lacet.

Le zéro naturel du véhicule passif est $z_{np} = -\dfrac{\gamma}{\tau}$. Avec la loi de typage dynamique on a donc un zéro

$$z_{td} = \frac{-\left(\dfrac{\gamma}{n} + K_3\right)}{\dfrac{\tau}{n} + K_4}$$ lorsque celui-ci n'est pas compensé.

La commande avec $K_4=0$ effectue un placement de zéro induit (le zéro est modifié par $K_3$ qui dépend des paramètres de réglage TGS et $K_w$(**à définir SVP**)).

Il est également possible de ne pas modifier le zéro naturel en imposant $K_4 = -\dfrac{\tau}{n} + K_w^{\,2}\, TGS\, \dfrac{\tau}{n}.$

Le système de commande comprend également un correcteur à avance de phase 26 recevant en entrée la sortie du module de synthèse.

L'angle réellement appliqué aux roues est celui appliqué par l'actionneur en réponse à la consigne d'angle de roue qui lui est envoyée. L'actionneur n'étant pas un actionneur idéal, il ne répond pas immédiatement à la consigne. L'on cherche à compenser la présence de l'actionneur grâce au correcteur à avance de phase. Le correcteur est alors réglé afin de compenser l'influence de la dynamique de l'actionneur, voir l'exemple ci-dessous.

Soit un actionneur dont la réponse peut être modélisée par exemple par une fonction de transfert d'ordre 1, selon l'équation (14) :

$$\alpha_{ar} = \frac{1}{1 + \tau.s}\alpha_{ar}^c \qquad (14)$$

où $\alpha_{ar}^c$ est l'angle de consigne donné par le correcteur de lacet appliqué sur l'actionneur et $\alpha_{ar}$ est l'angle effectivement obtenu aux roues arrière grâce à l'actionneur.

Le correcteur à avance de phase 26 permet de compenser la perte de phase due à la présence de l'actionneur en réglant les paramètres $\tau_1$, $\tau_2$ et K. Lorsqu'il est présent, c'est l'angle $\alpha_{ar}^{ap}$ qui est appliqué en entrée de l'actionneur :

$$\alpha_{ar}^{ap} = K.\frac{1 + \tau_1 s}{1 + \tau_2 s}\alpha_{ar}^c \qquad (15)$$

$$\alpha_{ar} = K.\frac{1 + \tau_1 s}{1 + \tau_2 s}.\frac{1}{1 + \tau.s}.\alpha_{ar}^c \qquad (16)$$

K règle le gain statique de l'avance de phase. Dans l'exemple de réalisation, il sera fixé à 1 puisque l'actionneur a un gain statique de 1, sinon le réglage est déterminé pour que la chaîne actionneur-avance de phase ait un gain statique de 1. $\tau_1$ et $\tau_2$ permettent de régler la bande dans laquelle le correcteur à avance de phase effectue son action sur la phase et sur le gain (cette analyse s'effectue grâce à un diagramme de Bode avec s=jω).

Etant donné que l'on cherche à diminuer l'influence de la dynamique de l'actionneur, l'objectif est d'améliorer son temps de réponse, ceci revient à choisir $\tau_1 = \tau$ et $\dfrac{\tau_2}{\tau} < 1$. Plus ce dernier rapport est inférieur à 1 et plus la réponse du système avance de phase-actionneur est rapide.

Le choix des paramètres de l'avance de phase modifie la bande passante du système avance de phase-actionneur.

Le correcteur à avance de phase émet en sortie une consigne d'angle de braquage des roues arrière qui est envoyée aux actionneurs 19 et 20.

Le système de commande comprend un module de calcul de variations de paramètres 27 pour calculer les valeurs courantes des paramètres variant autres que la vitesse. Le module de calcul des variations de paramètres 27 est capable d'estimer la valeur des rigidités de dérive en fonction des reports de charge dus à l'accélération latérale. En outre, le module 27 peut prendre en compte les informations d'adhérence disponibles, par exemple grâce à des algorithmes de correction de trajectoires pour estimer de manière plus précise les rigidités de dérive. La sortie du module 27 est envoyée au module de correction dynamique 24.

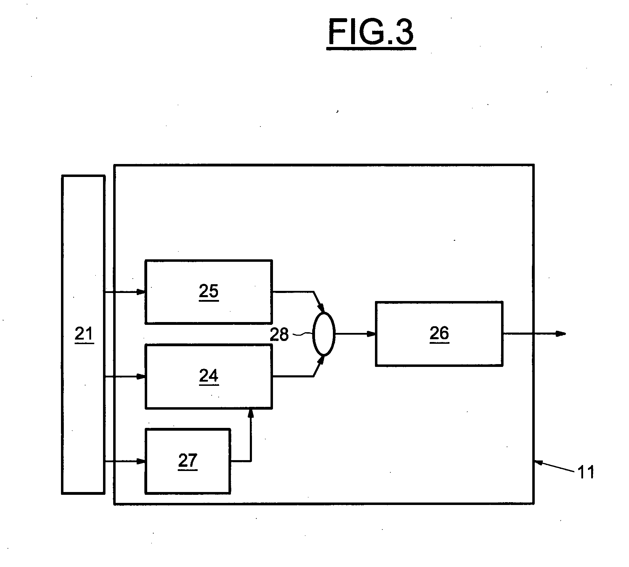

Dans le mode de réalisation illustré sur la figure 3, il n'est pas prévu de module de démultiplication fixe, et de modèle de référence des paramètres variants. La commande peut présenter une structure en boucle fermée et peut consister à calculer à partir de la mesure de la vitesse de lacet et de la vitesse du véhicule, une commande qui permet de typer les réponses statique et dynamique du véhicule en lacet.

D'un point de vue dynamique, on s'intéresse à un placement de la dynamique naturelle sur une dynamique désirée, et éventuellement à la compensation du zéro de la fonction transfert naturelle. Le calculateur peut également intégrer des algorithmes complémentaires de calcul des rigidités de dérive, des estimateurs basés sur les mesures des capteurs et un modèle de l'actionneur pour appliquer la commande sur les véhicules.

Dans ce cas, le véhicule est équipé d'un capteur de vitesse de lacet.

Le correcteur dynamique 24 utilise l'information de vitesse de lacet du véhicule mesurée pour boucler l'information. Il est également possible de faire du typage dynamique par placement de pôles ainsi qu'une compensation de zéro, ou toute autre action sur le zéro.

A titre d'exemple, on cherche à avoir un comportement équivalent décrit par l'équation différentielle (17), $K_\xi(t)$ et $K_\omega(t)$ sont les deux paramètres de réglages introduits pour typer la dynamique de réponse. La vitesse de lacet est celle du véhicule.

$$\dddot{\psi}_{\text{véhicule}}(t) + 2.\xi_d(t).\omega_d(t).\ddot{\psi}_{\text{véhicule}}(t) + \omega_d^2(t).\dot{\psi}_{\text{véhicule}}(t) = TGS.\frac{\gamma(t)}{n}.K_\omega^2(t).\alpha_v(t) \quad (17)$$

$$\xi_d(t) = K_\xi(V).\xi_n(t) \quad \text{et} \quad \omega_d(t) = K_\omega(V).\omega_n(t)$$

La commande proposée est ainsi donnée par l'équation différentielle (18) composée d'un bouclage sur $\dot{\psi}$ mesurée et $\ddot{\psi}$ estimée à partir de la mesure de la vitesse de lacet et d'une réaction positive sur $\alpha_v$ et sa dérivée estimée afin de compenser le zéro de la fonction de transfert.

$$\eta.\dot{\alpha}_{ar} + \rho.\alpha_{ar} = K_1.\dot{\psi}_{\text{véhicule}} + K_2.\ddot{\psi}_{\text{véhicule}} + K_3.\alpha_v + K_4.\dot{\alpha}_v \quad (18)$$

Dans ce mode de réalisation, les coefficients $(K_i(t))_{i=1..4}$ sont donnés par l'équation (19) :

$$K_1 = \omega_n^2 - \omega_d^2$$

$$K_2 = 2.\xi_n.\omega_n - 2.\xi_d.\omega_d$$

$$K_3 = -\frac{\gamma}{n} + K_\omega^2.TGS.\frac{\gamma}{n} \tag{19}$$

$$K_4 = -\frac{\tau}{n}$$

Ces coefficients dépendent des paramètres variants et sont donc des coefficients variants dans le temps.

Comme on le voit dans l'équation exprimant le coefficient $K_3$, le typage dynamique influence le typage statique qui doit donc être corrigé en intégrant le rapport élevé au carré des pulsations désirées et naturelles afin de maintenir le gain statique réglé grâce au paramètre TGS dans le correcteur statique.

Une stratégie pour l'implantation numérique de la loi de commande selon l'équation (18) sur calculateur est d'utiliser une approximation de la dérivée. Ceci conduit à l'expression de la commande échantillonnée (20) appliquée sur l'actionneur de la direction active à l'arrière.

$$\alpha_{ar}(k) = \frac{1}{\frac{\eta(k)}{T_e} + \rho(k)} \left[ \begin{array}{l} \left(K_1(k) + \frac{K_2(k)}{T_e}\right).\dot{\psi}(k) - \frac{K_2(k)}{T_e}.\dot{\psi}(k-1) + \\ \left(K_3(k) + \frac{K_4(k)}{T_e}\right).\alpha_v(k) - \frac{K_4(k)}{T_e}.\alpha_v(k-1) + \frac{\eta(k)}{T_e}.\alpha_{ar}(k-1) \end{array} \right]$$

$$(20)$$

Dans ce cas, seule l'information sur la vitesse de lacet est utilisée, tandis que pour la commande en boucle ouverte, on utilise la vitesse et l'accélération de lacet données par le modèle de référence.

Afin d'assurer la cohérence de l'application des lois de commande sur le véhicule, le modèle utilisé pour la synthèse de la commande représente de manière fiable le véhicule. La stratégie adoptée est par exemple de considérer qu'en dessous d'un certain seuil de vitesse $V_0$, seule la commande permettant le typage statique est appliquée, tandis qu'au-dessus de ce seuil, le typage dynamique est appliqué, celui-ci intégrant le typage statique.

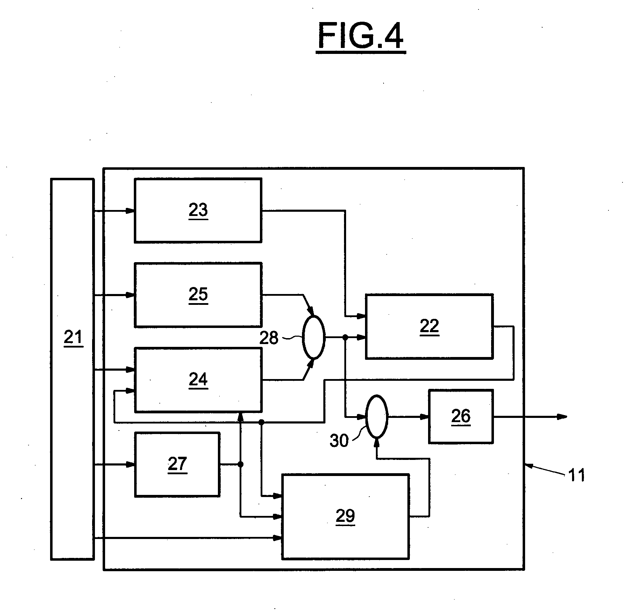

Le mode de réalisation illustré sur la figure 4 se rapproche de celui illustré sur la figure 2, à ceci près que les entrées comprennent une entrée de vitesse de lacet comme dans le mode de réalisation illustré sur la figure 3, et qu'il est prévu un module supplémentaire 29 de correction de boucle fermée recevant la sortie du module de calcul des variations de paramètres et du modèle de référence. Un sommateur 30 est interposé entre la sortie du module de synthèse 28 et l'entrée du correcteur à avance de phase 26 et reçoit donc la sortie du module de synthèse et la sortie du correcteur de bouclé fermée.

Le correcteur de boucle fermée est basé sur l'erreur de la vitesse de lacet de référence donnée par le modèle de référence et la vitesse de lacet fournie par l'entrée du système. Le gain statique est assuré par la structure en boucle fermée. Le placement des pôles de la dynamique de l'erreur est décrit plus en détail dans ce qui suit. On peut considérer un correcteur donné par l'équation (21) :

$$\eta.\dot{\alpha}_{ar}\Big|_{fb} + \rho.\alpha_{ar}\Big|_{fb} = G_1.\left(\dot{\psi}_{\text{véhicule}} - \dot{\psi}_{\text{modèle}}\right) + G_2.\left(\ddot{\psi}_{\text{véhicule}} - \ddot{\psi}_{\text{modèle}}\right) \tag{21}$$

avec $\dot{\alpha}_{ar}\big|_{fb}$ l'angle de braquage arrière de consigne de la boucle fermée en sortie du module supplémentaire 29 et $\alpha_{ar}\big|_{fb}$ la dérivée temporelle de cet angle de braquage.

Pour déterminer le gain de ce placement de pôles, on considère l'ensemble des commandes qui sont appliquées sur le véhicule. L'angle appliqué aux roues arrière est la somme de la contribution du correcteur dynamique et du correcteur de boucle fermée. On explicite la provenance des variables (modèle ou véhicule) et pour des raisons de clarté, la variable de temps est omise.

$$\alpha_{av} = \frac{\alpha_v}{n} \qquad\qquad (22)$$

$$\alpha_{ar} = \alpha_{ar}\big|_{ff} + \alpha_{ar}\big|_{fb}$$

$$\eta.\dot{\alpha}_{ar}\big|_{ff} + \rho.\alpha_{ar}\big|_{ff} = K_1.\dot{\psi}_{\text{modèle}} + K_2.\ddot{\psi}_{\text{modèle}} + K_3.\alpha_v + K_4.\dot{\alpha}_v \qquad (23)$$

$$\dddot{\psi}_{\text{véhicule}} + (2.\xi_n.\omega_n - G_2).\ddot{\psi}_{\text{véhicule}} + (\omega_n^2 - G_1).\dot{\psi}_{\text{véhicule}}$$
$$= TGS.\frac{\gamma}{n}.K_\omega^2.\alpha_v + (K_1 - G_1).\dot{\psi}_{\text{modèle}} + (K_2 - G_2).\ddot{\psi}_{\text{modèle}} \qquad (24)$$

$$\dddot{\psi}_{\text{modèle}} + (2.\xi_n.\omega_n - K_2).\ddot{\psi}_{\text{modèle}} + (\omega_n^2 - K_1).\dot{\psi}_{\text{modèle}} = TGS.\frac{\gamma}{n}.K_\omega^2.\alpha_v \qquad (25)$$

avec $\alpha_{ar}|_{ff}$ l'angle de braquage arrière de consigne de la boucle ouverte en sortie du module de synthèse 28, et $\dot{\alpha}_{ar}|_{ff}$ la dérivée de cet angle de braquage.

Les équations (24) et (25) - cette dernière étant obtenue avec le correcteur dynamique sur le modèle de référence - conduisent à (26).

$$(\dddot{\psi}_{\text{véhicule}} - \dddot{\psi}_{\text{modèle}}) + (2.\xi_n.\omega_n - G_2).(\ddot{\psi}_{\text{véhicule}} - \ddot{\psi}_{\text{modèle}}) + (\omega_n^2 - G_1).(\dot{\psi}_{\text{véhicule}} - \dot{\psi}_{\text{modèle}}) = 0$$
$$(26)$$

Cette dernière équation représente la dynamique de l'écart entre la vitesse de lacet du modèle et celle du véhicule.

Les coefficients du correcteur de boucle fermée permettent d'effectuer un placement de pôle de cette dynamique. Une des règles possibles pour effectuer le réglage adéquat de ces coefficients est de satisfaire un critère de robustesse (marge de gain et de phase), étant donné que cette partie de la commande s'effectue en boucle fermée, et que le véhicule est sujet à avoir des variations de paramètres inconnues.

Les modes de réalisation décrits jusqu'à présent permettent de générer une commande de braquage de roues arrière.

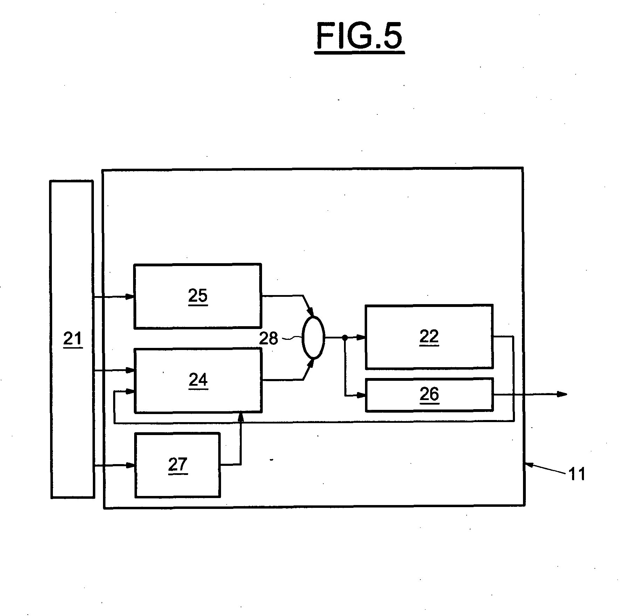

Les modes de réalisation illustrés sur les figures 5 à 7 permettent de générer une consigne de braquage des roues avant, notamment pour véhicule à deux roues directrices. On a

$$\alpha_{ar} = 0 \qquad\qquad (27)$$

Le mode de réalisation illustré sur la figure 5 se rapproche de celui illustré sur la figure 1, à ceci près qu'il peut être dépourvu de module de démultiplication fixe.

L'angle appliqué aux roues avant est la somme entre l'angle du volant et l'angle appliqué par la direction active avant.

Dans le modèle du véhicule, l'angle arrière $\alpha_{ar}$ est fixé à zéro. Le correcteur de partie statique est réglé comme suit, grâce aux paramètres TGS :

$$\alpha_{av}\big|_{statique} = \alpha_v + \alpha_{dir\_active} = TGS.\frac{\alpha_v}{n} \qquad\qquad (28)$$

avec $\alpha_{dir\_active}$ l'angle de braquage appliqué par la direction active.

Le correcteur de partie dynamique peut être prévu avec une commande à compensation de zéro.

La commande appliquée par la direction active est donnée par l'équation différentielle (30), composée d'un bouclage sur $\dot{\psi}$ et $\ddot{\psi}$ donnés par le modèle et d'une réaction positive sur $\alpha_v$ et sa dérivée afin de compenser le zéro de la fonction de transfert :

$$\alpha_{av}\big|_{dynamique} = \alpha_v + \alpha_{dir\_active} \qquad\qquad (29)$$

$$\tau.\dot{\alpha}_{dir\_active} + \gamma.\alpha_{dir\_active} = K_1.\dot{\psi} + K_2.\ddot{\psi} + K_3.\alpha_v + K_4.\dot{\alpha}_v \qquad (30)$$

Dans ce mode de réalisation, les coefficients $(K_i(t))_{i=1..4}$ sont donnés par l'équation (31) :

$$\begin{aligned}
K_1 &= \omega_n^2 - \omega_d^2 \\
K_2 &= 2.\xi_n.\omega_n - 2.\xi_d.\omega_d \\
K_3 &= -\gamma + K_\omega^2.TGS.\frac{\gamma}{n} \\
K_4 &= -\tau
\end{aligned} \qquad\qquad (31)$$

On utilise la même stratégie que précédemment pour l'implantation numérique de la loi de commande (29) pour obtenir le comportement équivalent donné par (8).

Dans le cas d'une commande sans compensation de zéro, on prévoit d'annuler le coefficient $K_4$ dans l'équation (30) pour obtenir la loi de commande permettant de typer la dynamique de lacet selon l'équation (13).

Le coefficient $K_4$ permet de régler le zéro de la fonction de transfert entre l'angle volant et la vitesse de lacet.

Le zéro naturel du véhicule passif est $z_{np} = \dfrac{\gamma}{\tau}$. Avec la loi de typage dynamique on a donc un zéro

$$z_{td} = \frac{-\left(\dfrac{\gamma}{n} + K_3\right)}{\dfrac{\tau}{n} + K_4} \quad \text{lorsque celui-ci n'est pas compensé.}$$

La commande avec $K_4=0$ effectue un placement de zéro induit (le zéro est modifié par $K_3$ qui dépend des paramètres de réglage TGS et $K_w$).

Il est également possible de ne pas modifier le zéro naturel en imposant $K_4 = -\dfrac{\tau}{n} + K_w^2\, TGS\, \dfrac{\tau}{n}$.

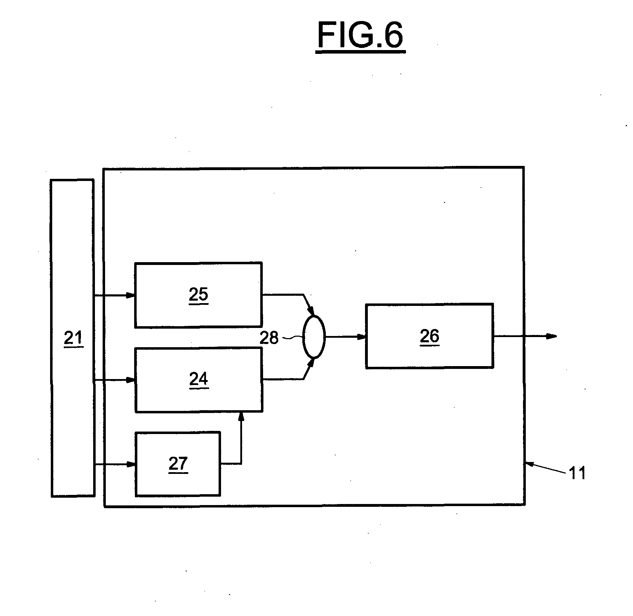

Le mode de réalisation illustré sur la figure 6 se rapproche du précédent, à ceci près qu'il est dépourvu de modèle de référence à paramètres variables.

Le correcteur de boucle fermée s'exprime selon l'équation (32) :

$$\tau.\dot{\alpha}_{dir\_active} + \gamma.\alpha_{dir\_active} = K_1.\dot{\psi}_{véhicule} + K_2.\ddot{\psi}_{véhicule} + K_3.\alpha_v + K_4.\dot{\alpha}_v \qquad (32)$$

Dans ce mode de réalisation, les coefficients $(K_i(t))_{i=1\cdots4}$ sont donnés par l'équation (33) :

$$K_1 = \omega_n^2 - \omega_d^2$$
$$K_2 = 2.\xi_n.\omega_n - 2.\xi_d.\omega_d$$
$$K_3 = -\gamma + K_\omega^2.TGS.\frac{\gamma}{n} \tag{33}$$
$$K_4 = -\tau$$

On boucle sur la vitesse de lacet du véhicule et non sur les informations données par le modèle de référence (vitesse et accélération de lacet de référence). Pour l'implémentation numérique selon la méthode d'approximation de la dérivée, l'information sur la vitesse de lacet du véhicule est utilisée. La sortie du système est formée par la sortie du correcteur à avance de phase 26.

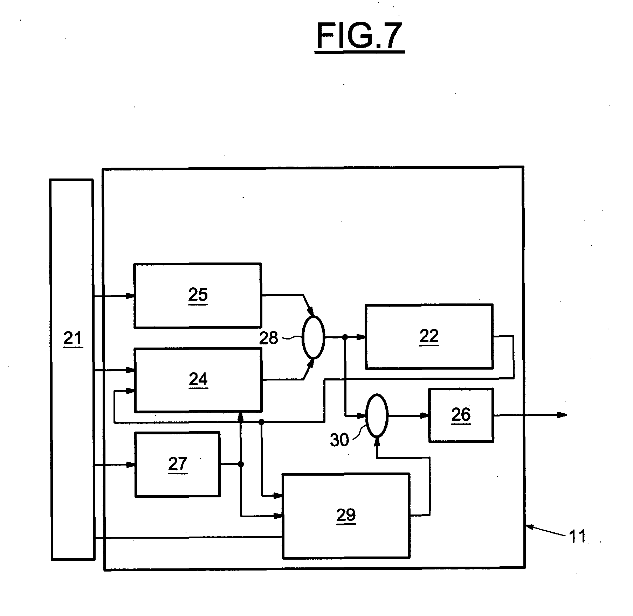

Le mode de réalisation illustré sur la figure 7 se rapproche de celui illustré sur la figure 4 au module de démultiplication fixe près et au fait qu'il est prévu pour un actionneur de direction active avant.

Dans le correcteur de boucle fermée, le gain statique est assuré par la présence de la boucle ouverte. On s'intéresse ici au placement de la dynamique de l'erreur. On peut utiliser par exemple une synthèse par placement de pôles en considérant le correcteur donné par l'équation (34).

$$\tau.\dot\alpha_{dir\_active}\big|_{fb} + \gamma.\alpha_{dir\_active}\big|_{fb} = G_1.(\dot\psi_{\text{véhicule}} - \dot\psi_{\text{modèle}}) + G_2.(\ddot\psi_{\text{véhicule}} - \ddot\psi_{\text{modèle}}) \tag{34}$$

avec $\alpha_{dir\_active}|_{fb}$ l'angle de braquage avant (de consigne) de la direction active en boucle fermée (sortie du module 29) et $\alpha_{dir\_active}|_{fb}$ la dérivée temporelle de cet angle.

Pour déterminer les gains de ce placement de pôles, il est nécessaire de considérer l'ensemble des commandes qui sont appliquées sur le véhicule. L'angle appliqué aux roues avant est la somme de l'angle volant, de la contribution du correcteur dynamique et du correcteur de boucle fermée déterminé ci-dessus.

$$\alpha_{av} = \alpha_{av} + \alpha_{dir\_active}\big|_{ff} + \alpha_{dir\_active}\big|_{fb} \tag{35}$$

$$\tau.\dot\alpha_{dir\_active}\big|_{ff} + \gamma.\alpha_{dir\_active}\big|_{ff} = K_1.\dot\psi_{\text{modèle}} + K_2.\ddot\psi_{\text{modèle}} + K_3.\alpha_v + K_4.\dot\alpha_v \tag{36}$$

$$\ddot\psi_{\text{véhicule}} + (2.\xi_n.\omega_n - G_2).\ddot\psi_{\text{véhicule}} + (\omega_n^2 - G_1).\dot\psi_{\text{véhicule}}$$
$$= TGS.\frac{\gamma}{n}.K_\omega^2.\alpha_v + (K_1 - G_1).\dot\psi_{\text{modèle}} + (K_2 - G_2).\ddot\psi_{\text{modèle}} \tag{37}$$

$$\ddot\psi_{\text{modèle}} + (2.\xi_n\omega_n - K_2).\ddot\psi_{\text{modèle}} + (\omega_n^2 - K_1).\dot\psi_{\text{modèle}} = TGS.\frac{\gamma}{n}.K\omega^2.\alpha_v \tag{38}$$

avec $\alpha_{dir\_active}|_{ff}$ l'angle de braquage appliqué par la direction active avant en boucle ouverte (sortie du module de synthèse 28) et $\alpha_{dir\_active}|_{ff}$ la dérivée de cet angle.

En combinant les équations (37) et (38) - cette dernière étant obtenue avec le correcteur sur le modèle de référence - conduit à (39) sur le même principe que pour le mode de réalisation de la figure 4 :

$$(\ddot{\psi}_{\text{véhicule}} - \ddot{\psi}_{\text{modèle}}) + (2.\xi_n.\omega_n - G_2).(\ddot{\psi}_{\text{véhicule}} - \ddot{\psi}_{\text{modèle}}) + (\omega_n^2 - G_1).(\dot{\psi}_{\text{véhicule}} - \dot{\psi}_{\text{mod}èle}) = 0$$

$$(39)$$

Cette équation représente la dynamique de l'écart entre la vitesse de lacet du modèle et celle du véhicule.

Les coefficients du correcteur de boucle fermée permettent donc d'effectuer un placement de pôle de cette dynamique. Une des règles possibles pour effectuer le réglage adéquat de ces coefficients est de satisfaire un critère de robustesse (marge de gain et de phase), étant donné que cette partie de la commande s'effectue en boucle fermée, et que le véhicule est sujet à avoir des variations de paramètres inconnues.

**Revendications**

1. Procédé de commande de braquage de roue directrice pour un véhicule à au moins trois roues, comprenant une étape de détermination de la loi de la réponse, statique et dynamique, en lacet du véhicule, ladite loi intégrant des variations temporelles des paramètres du modèle et de coefficients de correction associés, **caractérisé en ce qu'**il comprend une étape de correction à avance de phase pour tenir compte du retard d'au moins un actionneur pour générer une consigne d'angle de braquage de roues.

2. Procédé selon la revendication 1, dans lequel la détermination de la loi de la réponse en lacet du véhicule met en oeuvre un modèle interne de référence à paramètres variables.

3. Procédé selon l'une quelconque des revendications précédentes, dans lequel ladite loi intègre des variations temporelles des paramètres du modèle et de coefficients de correction associés en fonction de la vitesse du véhicule et d'au moins une condition de déplacement.

4. Procédé selon l'une quelconque des revendications précédentes, dans lequel ledit correcteur est paramétré en fonction d'informations du véhicule.

5. Procédé selon la revendication 4, dans lequel lesdites informations comprennent la vitesse du véhicule, l'angle du volant de direction et l'accélération latérale.

6. Procédé selon l'une quelconque des revendications précédentes, dans lequel on règle de façon indépendante la loi de la réponse statique et la loi de la réponse dynamique.

7. Procédé selon l'une quelconque des revendications précédentes, dans lequel la détermination d'au moins un correcteur est effectuée de façon analytique.

8. Système de commande de braquage de roue directrice pour un véhicule (1) à au moins trois roues, comprenant un moyen pour déterminer la loi de réponse, statique et dynamique, en lacet du véhicule, ladite loi intégrant des variations temporelles des paramètres du modèle et de coefficients de correction associés, **caractérisé en ce qu'**il comprend un correcteur à avance de phase (26) pour tenir compte du retard d'au moins un actionneur (9), le correcteur à avance de phase étant configuré pour générer une consigne d'angle de braquage de roues.

9. Système selon la revendication 8, comprenant un module de calcul des coefficients variables (27), un correcteur de partie dynamique à coefficients variables (24) recevant une sortie du module de calcul des coefficients variables, un correcteur de partie statique (25), un module de synthèse (28) recevant les sorties des correcteurs, et un modèle de véhicule à paramètres variables (22) recevant une sortie du module de synthèse, le correcteur à avance de phase (26) recevant une sortie du module de synthèse (28).

10. Système selon la revendication 9, dans lequel le correcteur de partie dynamique (24) est relié à la sortie du modèle de véhicule (22).

11. Système selon la revendication 9 ou 10, dans lequel le modèle de véhicule (22) comprend une entrée d'angle de braquage des roues avant.

**12.** Système selon la revendication 9, 10 ou 11, comprenant en outre un correcteur de boucle fermée (29) recevant la sortie du module de calcul des coefficients variables (27) et du modèle de véhicule (22) pour générer un signal de dynamique de l'écart entre la vitesse de lacet du modèle et la vitesse de lacet du véhicule, et un additionneur (30) pour additionner les signaux de sortie du correcteur de boucle fermée et du module de synthèse et fournir la somme au correcteur d'avance de phase.

**13.** Système selon la revendication 8, comprenant un module de calcul des coefficients variables (27), un correcteur de partie dynamique à coefficients variables (24) recevant une sortie du module de calcul des coefficients variables, un correcteur de partie statique (25), et un module de synthèse (28) recevant les sorties des correcteurs, le correcteur à avance de phase (26) recevant une sortie du module de synthèse.

**Patentansprüche**

**1.** Verfahren zur Steuerung des Einschlags eines gelenkten Rads für ein Fahrzeug mit mindestens drei Rädern, das einen Schritt der Bestimmung des Gesetzes der statischen und dynamischen Gierreaktion des Fahrzeugs enthält, wobei das Gesetz zeitliche Schwankungen der Parameter des Modells und von zugeordneten Korrekturkoeffizienten umfasst, **dadurch gekennzeichnet, dass** es einen Korrekturschritt mit Phasenvoreilung enthält, um die Verzögerung mindestens eines Aktors zu berücksichtigen, um einen Radeinschlagwinkel-Sollwert zu erzeugen.

**2.** Verfahren nach Anspruch 1, wobei die Bestimmung des Gesetzes der Gierreaktion des Fahrzeugs ein inneres Bezugsmodul mit variablen Parametern verwendet.

**3.** Verfahren nach einem der vorhergehenden Ansprüche, wobei das Gesetz zeitliche Schwankungen der Parameter des Modells und von zugeordneten Korrekturkoeffizienten abhängig von der Geschwindigkeit des Fahrzeugs und mindestens einem Bewegungszustand umfasst.

**4.** Verfahren nach einem der vorhergehenden Ansprüche, wobei das Korrekturglied abhängig von Informationen des Fahrzeugs parametriert wird.

**5.** Verfahren nach Anspruch 4, wobei die Informationen die Geschwindigkeit des Fahrzeugs, den Winkel des Lenkrads und die Seitenbeschleunigung enthalten.

**6.** Verfahren nach einem der vorhergehenden Ansprüche, wobei das Gesetz der statischen Reaktion und das Gesetz der dynamischen Reaktion unabhängig geregelt werden.

**7.** Verfahren nach einem der vorhergehenden Ansprüche, wobei die Bestimmung mindestens eines Korrekturglieds analytisch durchgeführt wird.

**8.** System zur Steuerung des Einschlags eines gelenkten Rads für ein Fahrzeug (1) mit mindestens drei Rädern, das eine Einrichtung zur Bestimmung des Gesetzes der statischen und dynamischen Gierreaktion des Fahrzeugs enthält, wobei das Gesetz zeitliche Schwankungen der Parameter des Modells und von zugeordneten Korrekturkoeffizienten umfasst, **dadurch gekennzeichnet, dass** es ein Korrekturglied mit Phasenvoreilung (26) enthält, um die Verzögerung mindestens eines Aktors (9) zu berücksichtigen, wobei das Korrekturglied mit Phasenvoreilung konfiguriert ist, um einen Radeinschlagwinkel-Sollwert zu erzeugen.

**9.** System nach Anspruch 8, das ein Berechnungsmodul der variablen Koeffizienten (27), ein Korrekturglied des dynamischen Teils mit variablen Koeffizienten (24), das einen Ausgang des Berechnungsmoduls der variablen Koeffizienten empfängt, ein Korrekturglied des statischen Teils (25), ein Synthesemodul (28), das die Ausgänge der Korrekturglieder empfängt, und ein Fahrzeugmodell mit variablen Parametern (22) enthält, das einen Ausgang des Synthesemoduls empfängt, wobei das Korrekturglied mit Phasenvoreilung (26) ein Ausgangssignal des Synthesemoduls (28) empfängt.

**10.** System nach Anspruch 9, wobei das Korrekturglied des dynamischen Teils (24) mit dem Ausgang des Fahrzeugmodells (22) verbunden ist.

**11.** System nach Anspruch 9 oder 10, wobei das Fahrzeugmodell (22) einen Einschlagwinkeleingang der Vorderräder enthält.

**12.** System nach Anspruch 9, 10 oder 11, das außerdem ein Regelkreis-Korrekturglied (29), das den Ausgang des Berechnungsmoduls der variablen Koeffizienten (27) und des Fahrzeugmodells (22) empfängt, um ein Dynamiksignal der Abweichung zwischen der Giergeschwindigkeit des Modells und der Giergeschwindigkeit des Fahrzeugs zu erzeugen, und einen Addierer (30) enthält, um die Ausgangssignale des Regelkreis-Korrekturglieds und des Synthesemoduls zu addieren und die Summe an das Phasenvoreilung-Korrekturglied zu liefern.

**13.** System nach Anspruch 8, das ein Berechnungsmodul der variablen Koeffizienten (27), ein Korrekturglied des dynamischen Teils mit variablen Koeffizienten (24), das einen Ausgang des Berechnungsmoduls der variablen Koeffizienten empfängt, ein Korrekturglied des statischen Teils (25) und ein Synthesemodul (28) enthält, das die Ausgänge der Korrekturglieder empfängt, wobei das Korrekturglied mit Phasenvoreilung (26) einen Ausgang des Synthesemoduls empfängt.

**Claims**

**1.** Method for controlling the lock of a steering wheel for a vehicle with at least three wheels, comprising a step of determining the vehicle yaw response law, static and dynamic, said law incorporating time-related variations of the parameters of the model and of associated correction coefficients, **characterized in that** it comprises a phase advance correction step to take account of the delay of at least one actuator for generating a wheel lock angle setpoint.

**2.** Method according to Claim 1, in which the determination of the vehicle yaw response law implements a reference internal model with variable parameters.

**3.** Method according to any one of the preceding claims, in which said law incorporates time-related variables of the parameters of the model and of associated correction coefficients as a function of the speed of the vehicle and of at least one displacement condition.

**4.** Method according to any one of the preceding claims, in which said corrector is parameterized according to information from the vehicle.

**5.** Method according to Claim 4 in which said information comprises the speed of the vehicle, the angle of the steering wheel and the lateral acceleration.

**6.** Method according to any one of the preceding claims, in which the static response law and the dynamic response law are set independently.

**7.** Method according to any one of the preceding claims, in which the determination of at least one corrector is performed analytically.

**8.** System for controlling the steering wheel lock for a vehicle (1) with at least three wheels, comprising a means for determining the vehicle yaw response law, static and dynamic, said law incorporating time-related variations of the parameters of the model and of associated correction coefficients, **characterized in that** it comprises a phase advance corrector (26) for taking account of the delay of at least one actuator (9), the phase advance corrector being configured to generate a wheel lock angle setpoint.

**9.** System according to Claim 8, comprising a module for computing variable coefficients (27), a dynamic part corrector with variable coefficients (24) receiving an output from the variable coefficients computation module, a static part corrector (25), a synthesis module (28) receiving the outputs of the correctors, and a vehicle model with variable parameters (22) receiving an output from the synthesis module, the phase advance corrector (26) receiving an output from the synthesis module (28).

**10.** Method according to Claim 9, in which the dynamic part corrector (24) is linked to the output of the vehicle model (22).

**11.** System according to Claim 9 or 10, in which the vehicle model (22) comprises a front wheel lock angle input.

**12.** System according to Claim 9, 10, or 11, also comprising a closed loop corrector (29) receiving the output from the module for computing variable coefficients (27) and from the vehicle model (22) to generate a dynamic signal of the deviation between the yaw speed of the model and the yaw speed of the vehicle, and an adder (30) for adding the output signals from the closed loop corrector and from the synthesis module and supplying the sum to the phase advance corrector.

13. Method according to Claim 8, comprising a module for computing variable coefficients (27), a dynamic part corrector with variable coefficients (24) receiving an output from the module for computing variable coefficients, a static part corrector (25), and a synthesis module (28) receiving the outputs from the correctors, the phase advance corrector (26) receiving an output from the synthesis module.

# FIG.1

# FIG.2

## FIG.3

## FIG.4

FIG.5

# FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2864001
- EP 1285833 A
- US 20050043874 A
- EP 0663333 A